# EUROPEAN PATENT APPLICATION

(11) **EP 1 926 124 A1**
(43) Date of publication of application: **28.05.2008**
(21) Application number: 06797809.8
(22) Date of filing: 11.09.2006
(51) Int. Cl.: H01J 61/16, F21S 2/00, F21Y 103/00

(54) **HOT CATHODE DISCHARGE LAMP, LAMP UNIT AND DISPLAY APPARATUS**

(30) Priority: 13.09.2005 JP 2005265792
(71) Applicant: MATSUSHITA ELECTRIC INDUSTRIAL CO., LTD., Osaka 571-8501 (JP)
(72) Inventor: IIDA, Shiro c/o Matsushita Electric Co., Ltd., I.P.R.O.C., Chuo-ku, Osaka 540-6207 (JP)
(74) Representative: Eisenführ, Speiser & Partner
(86) International application number: PCT/JP2006/318002
(87) International publication number: WO 2007/032319

(57) **Abstract**

A hot cathode discharge lamp (20) includes a glass bulb (22) having a protective film (24) and a phosphor layer (26) laminated on an inner face thereof and having mercury (21) and a buffer rare gas mixture enclosed therein, and bead-mounted electrodes (30a, 30b). The hot cathode discharge lamp (20) is used as a light source in a backlight unit, in a 50°C to 70°C atmosphere. The buffer rare gas mixture includes krypton at a partial pressure rate of 20% or more.

## Description

### TECHNICAL FIELD

The present invention relates to a hot cathode discharge lamp, a lamp unit that includes the hot cathode discharge lamp as a light source, and a display apparatus.

### BACKGROUND ART

Currently, mainly cold cathode discharge lamps are used as a light source in backlight units of liquid crystal displays. Due to being well-suited to reductions in diameter, cold cathode discharge lamps are favorably used as a light source in backlight units for which thinness is demanded.
*See patent document 1: Japanese Patent Application Publication No.* S56-73855

### DISCLOSURE OF THE INVENTION

### PROBLEMS SOLVED BY THE INVENTION

In recent years, the size of liquid crystal displays has been increasing. Due to the accompanying increase in the size of backlight units, when cold cathode discharge lamps are used as a light source, the lighting circuit becomes complex and there is the risk that power consumption will increase.
In view of this, consideration has begun to be given to using hot cathode discharge lamps, which have a higher luminous efficacy and simpler lighting circuit than cold cathode discharge lamps, as a light source in backlight units.

However, hot cathode discharge lamps have a shorter lamp lifetime than cold cathode discharge lamps, and are therefore unsuitable for use as a light source in a backlight unit.
The present invention has been achieved in view of the above problem, and an aim thereof is to provide a hot cathode discharge lamp, a lamp unit, and a display apparatus that have a long lifetime.

### MEANS TO SOLVE THE PROBLEMS

The inventors of the present invention performed diligent research in order to extend the lifetime of a hot cathode discharge lamp for a backlight unit. The inventors focused their attention on the fact that as the partial pressure rate of the krypton used as a buffer rare gas is increased, lamp lifetime is extended. However, it is conventionally known that lamp output decreases as the enclosed amount of krypton is increased, and therefore the maximum partial pressure rate of krypton has been at most approximately 15%.

However, the inventors found that the problem in which the lamp output decreases as the partial pressure rate of krypton is increased occurs when a hot cathode discharge lamp is operated in a room temperature atmosphere, but does not occur when a hot cathode discharge lamp is operated in a 50°C to 70°C atmosphere such as when disposed in the housing of a backlight unit.
Therefore, the present invention is a hot cathode discharge lamp including an envelope that has a rare gas enclosed therein, the hot cathode discharge lamp being arranged in a housing of a lamp unit, wherein the rare gas includes krypton at a partial pressure rate of 20% or more.

### EFFECTS OF THE INVENTION

According to this structure, krypton is enclosed as a rare gas at a partial pressure rate of 20% or more, thereby achieving the effect of a longer lamp lifetime than in conventional technology. Also, since the hot cathode discharge lamp of the present invention is used as a light source in a lamp unit that includes a housing, and the temperature of such atmosphere is higher than room temperature, the lamp output is high even when krypton is enclosed as a buffer rare gas. Also, the lamp voltage decreases as the krypton partial pressure rate increases, which has advantages such as improving the starting characteristic and facilitating the sustaining of a discharge.

Here, the partial pressure rate of the krypton is preferably 60% or less. This is because lamp dimming becomes difficult if the partial pressure rate of krypton in the rare gas mixture exceeds 60%. Since krypton has a higher atomic weight than argon, the mercury enclosed in the envelope diffuses less readily as the krypton partial pressure rate increases, as a result of which the luminous flux start-up characteristic from starting of the lamp worsens. In view of this as well, the partial pressure rate of krypton in the rare gas mixture is preferably 60% or less. Furthermore, since krypton is far more expensive than argon, enclosing more than the required amount of krypton would lead to a meaningless rise in cost. In view of this as well, the partial pressure rate of krypton in the rare gas mixture is preferably 60% or less. Additionally, when the partial pressure rate of krypton in the rare gas mixture exceeds 60%, so-called moving stripes appear during dimmed lamp operation.

Also, the partial pressure rate of the krypton is more desirably 45% or more. This structure reduces the lamp voltage, thereby increasing the lamp current, which enables obtaining a very highly efficient lamp.
Here, the partial pressure rate of the krypton is more desirably 55% or less. This is because it was confirmed by experimentation that lamp output beings to fall when the krypton partial pressure rate exceeds 55%.

The present invention is also a lamp unit including: a housing; and any of the above hot cathode discharge lamps, being arranged in the housing. This structure enables obtaining a lamp unit that is highly efficient and has a long lifetime.
The present invention is also a display apparatus including the above lamp unit as a light source. This structure enables obtaining a display apparatus that is highly efficient and has a long lifetime and low power consumption.

Another display apparatus of the present invention includes: a housing; and any of the above hot cathode discharge lamps, being arranged in the housing. This structure enables obtaining a display apparatus that is highly efficient and has a long lifetime and low power consumption.

### BRIEF DESCRIPTION OF THE DRAWINGS

Fig.1 is a schematic perspective view showing the structure of a 16:9 aspect ratio liquid crystal display pertaining to the embodiment;
Fig.2 is a schematic perspective view showing the structure of a backlight unit for a liquid crystal display, pertaining to the embodiment;
Fig.3 is a cross-sectional view showing the structure of a hot cathode discharge lamp pertaining to the embodiment;
Fig.4 is a table showing the relationship between lamp lifetime and the partial pressure rate of krypton in a buffer rare gas mixture;
Fig.5 diagrammatically shows moving stripes that appear during dimmed lamp lighting;
Figs.6A and 6B are cross-sectional views showing the structure of a hot cathode discharge lamp pertaining to a modification; and
Fig.7 is a table showing the relationship between lamp lifetime and the partial pressure rate of krypton in a buffer rare gas mixture in the hot cathode discharge lamp pertaining to the modification.

### DESCRIPTION OF THE CHARACTERS

- 1: backlight unit
- 10: housing
- 20: hot cathode discharge lamp
- 22: glass bulb
- 31a, 31b: electrode coil

### BEST MODE FOR CARRYING OUT THE INVENTION

The following describes a hot cathode fluorescent lamp, backlight unit, and LCD (Liquid Crystal Display) apparatus pertaining to embodiment of the present invention with reference to the drawings.

### LCD apparatus structure

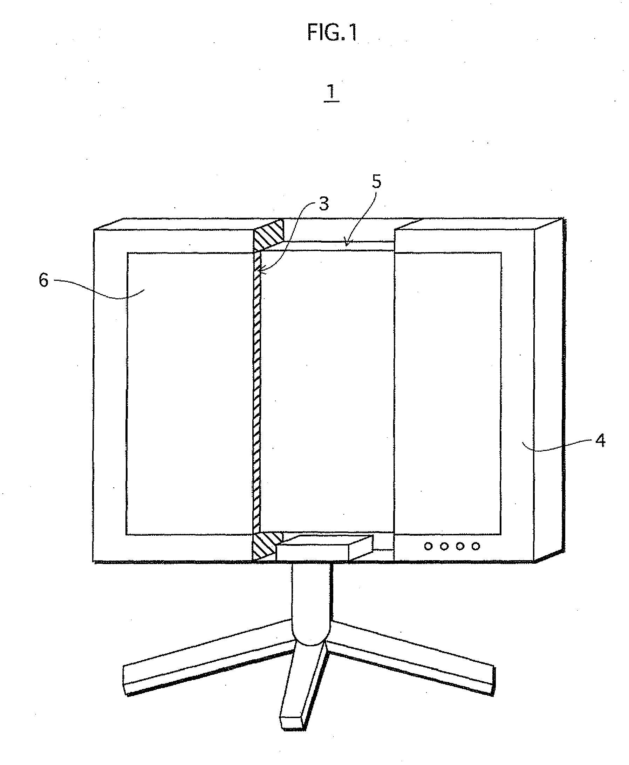

The following describes the structure of the LCD apparatus of the present embodiment with reference to Fig.1. Fig.1 shows the LCD apparatus of the present invention, where a portion has been cut away to show the internal condition thereof.

An LCD apparatus 1 is, for example, a liquid crystal color TV, and includes a liquid crystal screen unit 3 and a backlight unit 5 that are incorporated in a housing 4. The liquid crystal screen unit 3 includes, for example, a color filter substrate, liquid crystals, a TFT substrate, and a drive module (not depicted). Color images are displayed on a screen 6 of the liquid crystal screen unit 3 based on an image signal received from a device that is external to the liquid crystal screen unit 3.

### Backlight unit structure

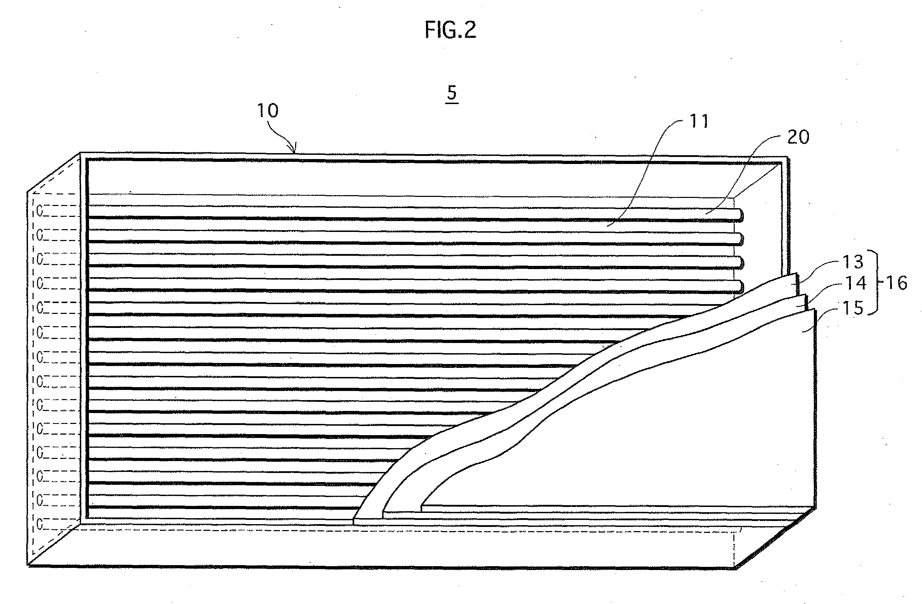

The following describes the structure of the backlight unit of the present embodiment with reference to Fig.2. Fig.2 is a schematic perspective view showing the structure of the backlight unit 5 for a 16: 9 aspect ratio LCD, pertaining to the present embodiment. A portion of a front panel 16 has been cut away in Fig.2 to show the internal structure of the backlight unit 5.

As shown in Fig.2, the backlight unit 5 includes a plurality of hot cathode discharge lamps 20, a housing 10 that has an opening and stores the lamps 20, and the front panel 16 that covers the opening of the housing 10.
The housing 10 is made of, for example, polyethelyne terephthalate (PET) resin, and a metal such as silver has been vapor-depositing on an inner face 11 to form a reflective surface.

Each of the hot cathode discharge lamps 20 is shaped as a straight tube, and in the present embodiment, 14 of the lamps 20 are arranged in the housing 10 in accordance with a direct-type backlight unit, and are electrically connected in parallel. Constant current control of the lamps 20 is performed by a lighting circuit not depicted in Fig.2. Note that the structure of the hot cathode discharge lamps 20 is described later.
The translucent front panel 16 is composed of a diffusion plate 13, a diffusion sheet 14, and a lens sheet 15 laminated in the stated order. The opening of the housing 10 is covered by the translucent front panel 16 and hermitically sealed such that foreign objects such dust and dirt cannot enter the interior.

The diffusion plate 13 and diffusion sheet 14 of the front panel 16 disperse and diffuse light emitted from the lamps 20, and the lens sheet 15 aligns the emitted light with the normal direction of the lens sheet 15, as a result of which, the light emitted from the lamps 20 shines in a forward direction evenly across the entire surface (emitting face) of the front panel 16.

### Hot cathode discharge lamp structure

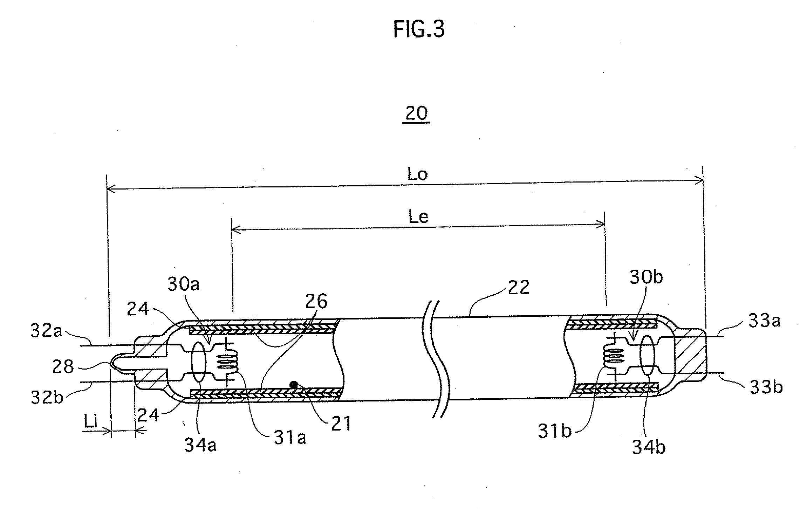

The following describes a hot cathode discharge lamp of the present embodiment. Fig.3 is a cross-sectional view showing the structure of the hot cathode discharge lamp (hereinafter, may be simply called the "lamp") 20.

The lamp 20 includes a straight-tube shaped glass bulb (envelope) 22 and a pair of electrodes 30a and 30b provided at respective ends in the glass bulb 22. The glass bulb 22 is made of barium strontium silicate glass (a soft glass whose softening point is 675°C).
Also, an evacuation tube 28 is connected to one end of the glass bulb 22 (in Fig.3A, the left end). The evacuation tube 28 is used when evacuating the interior of the glass bulb 22 and enclosing rare gases therein, and is sealed after the evacuation and enclosing has been performed. Providing the evacuation tube 28 at one end of the glass bulb 22 instead of at both ends facilitates coldest point control. In other words, it is impossible to know where the coldest point is if an evacuation tube is provided at both ends.

The portion of the evacuation tube 28 that protrudes outward has a length Li of 10 mm. The length Li is preferably from 5 mm to 30 mm, or more preferably from 15 mm to 30 mm. If Li is less than 5 mm, sealing and cutting of the evacuation tube 28 becomes difficult. Setting the length Li from 15 mm to 30 mm enables improving lamp efficiency by coldest point control. The longer Li is over 30 mm, the more readily breakable the protruding portion becomes, and the larger the non-light-emitting portion becomes, which reduces commercial value. Also, a further improvement in efficiency cannot be expected even if Li is made longer than 30 mm.

The electrodes 30a and 30b are so-called glass bead mounted electrodes, and are pinch-sealed (crush sealed) at the ends of the glass bulb 22. The electrodes 30a and 30b are composed of triple-coil electrode coils 31a and 31b having 3 turns; pairs of lead wires 32a and 32b, and 33a and 33b that support the electrode coils 31a and 31b spanning therebetween; and bead glass 34a and 34b that supports the lead wires 32a, 32b, 33a, and 33b. The electrode coils 31a and 31b are made of, for example, tungsten, and strontium oxide, calcium oxide, or barium oxide has been applied thereon as an emitter.

A protective film 24 composed of alumina has been formed on the inner face of the glass bulb 22. A phosphor layer 26 has been laminated on the protective film 24. The phosphors in the phosphor layer 26 are a mixture of red (Y₂O₃:Eu), green (LaPO₄:Ce,Tb₃) and blue (BaMg₂Al₁₆O₂₇:Eu,Mn) light emitting rare earth phosphors.
The glass bulb 22 has enclosed therein approximately 5 mg of mercury 21, and a buffer rare gas mixture including 250 Pa of argon (Ar) and 250 Pa of krypton (Kr) at room temperature. In other words, in the present embodiment, krypton is enclosed in the glass bulb 22 as a rare gas at a partial pressure rate of 50%.

Note that instead of elemental mercury, the mercury 21 enclosed in the glass bulb 22 may be mercury in an amalgam form such as zinc mercury, tin mercury, bismuth mercury, or indium mercury.
The following describes dimension specifications etc. of the lamp 20 when used in a backlight unit for a 45-inch LCD apparatus.
In this case, the glass bulb 22 has a tube outer diameter of 12.0 mm, a tube inner diameter of 10.0 mm, an overall length Lₒ of 1010 mm, an inter-electrode distance Le of 950 mm, and a tube wall loading We of 0.05 (W/cm²). The tube wall loading is a value obtained by dividing the lamp power by the internal surface area of the portion of the glass bulb 22 that corresponds to the inter-electrode distance Le.

Furthermore, an argon/krypton gas mixture (50% Ar, 50% Kr) is enclosed as a buffer rare gas mixture at a pressure of 500 Pa at room temperature. Details of the buffer rare gas mixture are described later.
Note that in order to obtain a lamp having a long lifetime, the tube wall loading We of the lamp 20 is preferably specified in the range of 0.025 to 0.07 (W/cm²).

If the tube wall loading is greater than 0. 07 (W/cm²), the luminous flux degrades intensely in a short time period and a long lifetime cannot be obtained. Also, if the tube wall loading is less than 0.025 (W/cm²), an excessively large lamp tube diameter is required to obtain the necessary luminous flux while maintaining a fixed lamp power, and such an excessively large lamp tube is not suitable for use in a backlight unit, Also, if the power is reduced while maintaining a fixed lamp size, it becomes difficult to sustain a discharge.

The inventors of the present invention performed diligent research in order to extend the lifetime of hot cathode discharge lamps used as a light source in a backlight unit. The inventors focused their attention on the fact that lamp lifetime is extended as the partial pressure rate of krypton in the buffer rare gas mixture is increased. Note that the lamp lifetime is extended as the partial pressure rate of krypton is increased because instead of using mainly argon, as is common, the partial pressure rate of krypton, which has a higher atomic weight than argon, is increased, which makes it difficult for the applied emitter to disperse off of the electrode coils. However, it is conventionally known that lamp output decreases as the enclosed amount of krypton is increased, and therefore the maximum partial pressure rate of krypton has been at most approximately 15%.

However, as a result of their diligent research, the inventors found that the problem in which the lamp output decreases as the partial pressure rate of krypton is increased occurs when a hot cathode discharge lamp is operated in a room temperature atmosphere, but does not occur in a high temperature atmosphere of 50°C to 70°C such as when a hot cathode discharge lamp is operated in the housing of a backlight unit.

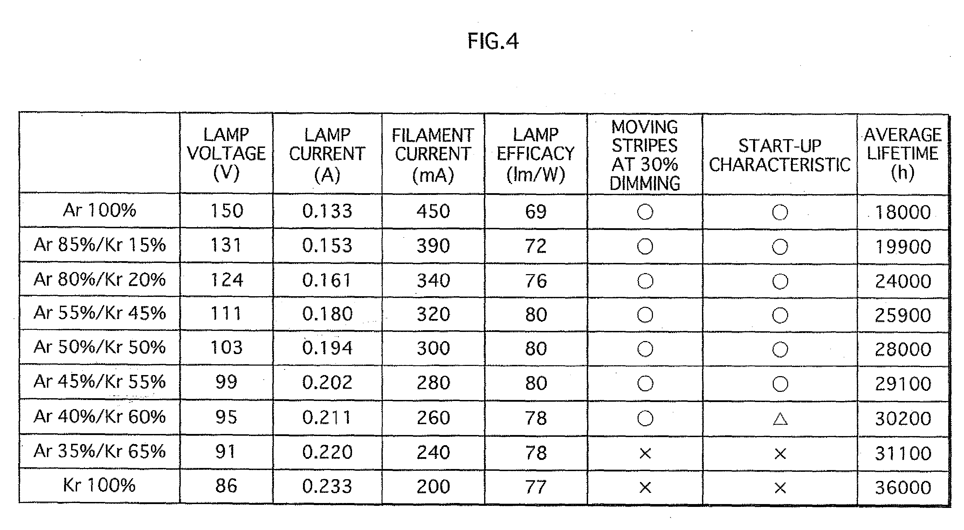

In view of this, the inventors of the present invention performed an examination to find a preferable partial pressure rate of krypton in the buffer rare gas mixture. Fig.4 is a table showing the relationship between lamp lifetime and the partial pressure rate of krypton in the buffer rare gas mixture. Note that "○" (a circle) in the "moving stripes at 30% dimming" column indicates that moving stripes did not appear, and "×" (an X) in the same column indicates that moving stripes appeared. Also, in the "start-up characteristic" column, "○" (a circle) indicates a favorable state, "Δ" (a triangle) indicates an acceptable state, and "×" (an X) indicates a poor state.

Since cathode ray tube (CRT) apparatuses that are conventionally widely used as displays have a lifetime of approximately 20,000 hours, it is desirable for the light source of a backlight unit for an LCD to have at least a lifetime of 20,000 hours.
According to Fig.4, it is necessary for the partial pressure rate of krypton in the buffer rare gas mixture to be 20% or more since average lamp lifetime exceeds 20,000 hours in such a case. Also, the lamp voltage decreases as the krypton partial pressure rate increases, which has advantages such as improving the starting characteristic and facilitating the sustaining of a discharge.

Furthermore, in the lamp 20, assuming that the rate power is constant (e.g., 20 W), the higher the krypton partial pressure rate is raised, the lower the lamp voltage decreases and the higher the lamp current increases. The temperature of the electrode coils 31a and 31b must be raised in order to cause electrons to be emitted from the applied emitter during lamp operation, and the electrode coils 31a and 31b cannot be sufficiently heated solely by the lamp current. Therefore, in conventional technology, a separate filament current is applied to the electrode coils 31a and 31b, which are heated by the flowing filament current. In other words, the lower the lamp current, the greater the filament current must be in order to raise the temperature of the electrode coils 31a and 31b. Since the filament current is applied separately and in addition to the lamp power, from the viewpoint of suppressing power consumption, it is desirable to increase the lamp current as much as possible in order to reduce the amount of filament current that is required. As a result of their diligent research, the inventors found that raising the krypton partial pressure rate enables reducing the lamp voltage and increasing the lamp current, thereby lowering the required amount of filament current and suppressing energy loss.

The inventors also found through experimentation that lamp dimming becomes slightly difficult when the krypton partial pressure rate exceeds 60%, and the krypton partial pressure rate is therefore preferably 60% or less. Note that although dimming becomes slightly difficult when the krypton partial pressure rate exceeds 60%, since the lifetime is extended as the partial pressure rate of krypton is increased, it is desirable to determine the krypton partial pressure ratio taking into consideration the demands for both a long lifetime and favorable dimming characteristics.

Since krypton has a higher atomic weight than argon, the mercury enclosed in the glass bulb 22 diffuses less readily as the krypton partial pressure rate increases, as a result of which the start-up characteristic from starting of the lamp worsens. In view of this as well, the partial pressure rate of krypton in the rare gas mixture is preferably 60% or less. Note that the start-up characteristic results shown in Fig.4 were measured visually.

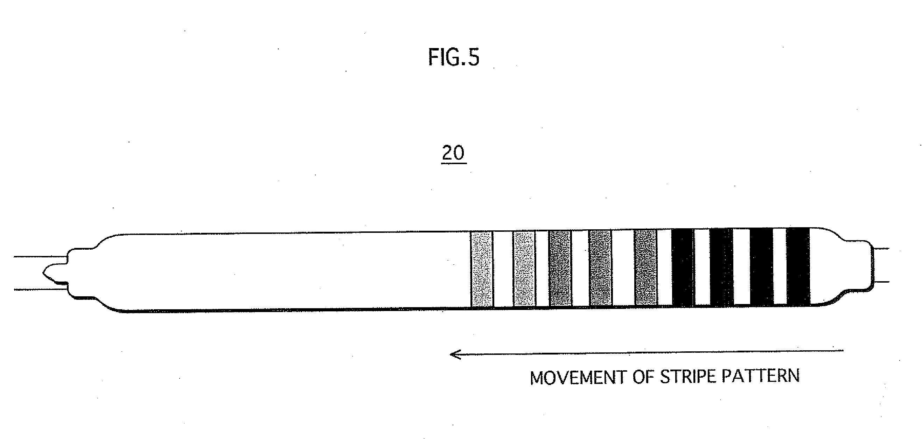

Furthermore, since krypton is far more expensive than argon, enclosing more than the required amount of krypton would lead to an unnecessary rise in cost. In view of this as well, the partial pressure rate of krypton in the rare gas mixture is preferably 60% or less.
Additionally, when the partial pressure rate of krypton in the rare gas mixture exceeds 60%, so-called moving stripes appear during dimmed lamp operation. Fig.5 diagrammatically shows moving stripes that appear during dimmed lamp operation, and is used to illustrate the above-mentioned moving stripes.

Moving stripes are a phenomenon in which, when the lamp 20 is operated, alternating light portions and dark portions appear in part or all of the lamp 20, thereby forming a striped pattern, and such stripes move toward either one of the tube ends in the lamp 20. In the example shown in Fig.5, the striped pattern is moving from the right side of the page to the left side of the page.
Although the cause of the moving stripes is not clearly known at present, it was confirmed that the moving stripes appear during dimming and when the krypton partial pressure rate is increased. The inventors' diligent research revealed that the occurrence of the moving stripes becomes significant when the krypton partial pressure rate exceeds 60%.

It is especially desirable for the partial pressure rate of krypton in the rare gas mixture enclosed in the glass bulb 22 to be 45% or more. This enables reducing the lamp voltage and raising the lamp current, thereby obtaining a very highly efficient lamp.
Also, as shown in Fig.4, since experimentation confirmed that lamp efficiency somewhat drops when the krypton partial pressure rate exceeds 55%, the krypton partial pressure rate is desirably 55% or less. This is thought to be because of the following. Up to a krypton partial pressure rate of 45%, energy loss can be suppressed by the reduction in filament current that accompanies the increase in lamp current. However, when the krypton partial pressure rate exceeds 55%, the lamp current becomes too large and is consumed as heat when flowing through the electrode coils 31a and 31b, which increases the amount of energy loss and lowers lamp efficiency.

Also, the inventors of the present invention manufactured a backlight unit whose light source was hot cathode discharge lamps (50% partial pressure rate of krypton) of the present embodiment, and upon testing the lamp, did not find any problems regarding a reduction in lamp output. Also, the lamp output of such hot cathode discharge lamp is approximately 80 lm/W as shown in Fig.4, and since the lamp output of a cold cathode discharge lamp is approximately 50 lm/M, a backlight unit can be made more highly efficient by using a hot cathode discharge lamp as a light source.
As described above, the present invention enables providing a hot cathode discharge lamp, lamp unit, and LCD apparatus that are highly efficient and have a long lifetime.

### Modifications

Although described based on the embodiment, the content of the present invention is of course not limited to the concrete example in the above embodiment. For example, modifications such as the following are also applicable.

(1) Although the electrode coils are described above as having three turns, lamp lifetime can be extended by further increasing the number of turns and increasing the amount of emitter applied to the electrode coils.
   Here, the length of the electrode coil in the coil axis direction must be increased in order to increase the number of turns, and the diameter of the glass bulb must therefore be increased. To conform to the increase in electrode coil length, instead of increasing the inner diameter of the glass bulb while keeping a circular cross section, it is preferable to give the cross section of the glass bulb a flattened shape such as an ellipse, thus resulting in a shape having a major diameter and a minor diameter.

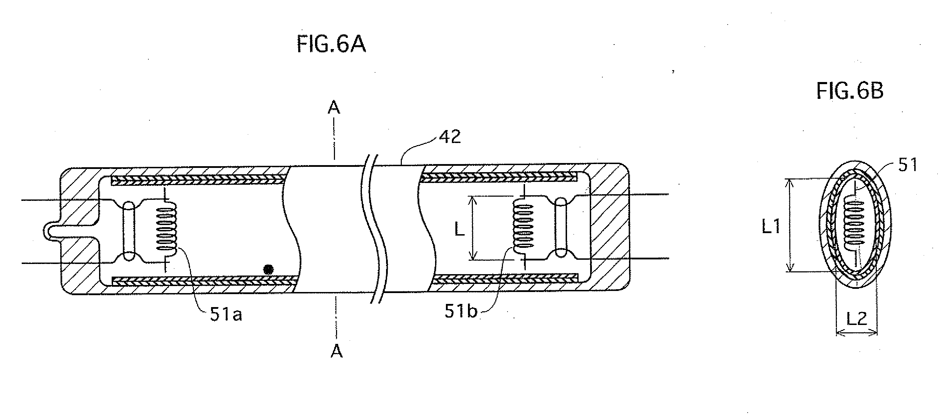

Figs.6A and 6B show a hot cathode discharge lamp of the present modification, where Fig. 6A shows a cross section parallel to the tube axis, and Fig. 6B shows a cross sectional perpendicular to the tube axis.
As shown in Figs.6A and 6B, the cross section of a glass bulb 42 has been given a flattened shape, and electrode coils 51a and 51b have been arranged such that their axes are pointed in the major diameter direction of the flattened shape, thereby enabling an increase in the number of turns in the electrode coils 51a and 51b.

Letting L be the length of the electrode coils 51a and 51b in the direction orthogonal to the tube axis, letting L1 be the length of the major inner diameter of the glass bulb 42, and letting L2 be the length of the minor inner diameter of the glass bulb 42, it is preferable for the relationship L2<L<L1 to be satisfied. This enables obtaining a hot cathode discharge lamp having a long lifetime with respect to the thickness of the glass bulb (thickness in the minor inner diameter direction).

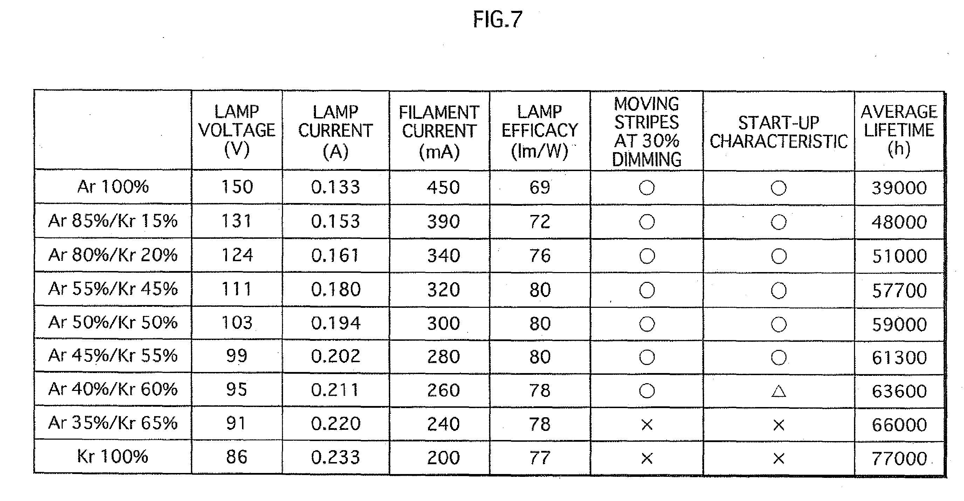

Fig.7 is a table showing the relationship between lamp lifetime and the partial pressure rate of krypton in the buffer rage gas of the hot cathode discharge lamp of the present modification. For the same reason as described above, the partial pressure rate of krypton is preferably 20% to 60% inclusive. It is particularly desirable for the partial pressure rate of krypton to be 45% to 55% inclusive.

Using the hot cathode discharge lamp of the present modification as a light source in a backlight unit enables obtaining a backlight unit that is thinner and has a higher efficiency. Also, using the backlight unit of the present modification enables obtaining an LCD apparatus that is thinner and has a higher efficiency.
(2) Although argon and krypton are described above as being enclosed in the lamp as buffer rare gases, neon and xenon may additionally be enclosed in the lamp. Xenon has a high atomic weight, which enables suppressing dispersing of the emitter applied to the electrode coils. Enclosing xenon in the lamp therefore further extends the lamp lifetime.

(3) Although the glass bulb is described above as being straight in shape from an external viewpoint, the present invention is not limited to this. For example, the glass bulb may have another shape such as a "U" shape or the shape of a "U" whose bottom line is straight.
(4) Although the formation of a protective film is described above, the formation of the protective film may be omitted.
(5) Although a backlight unit is described above as an example of a lamp unit, the present invention is not limited to this. The lamp unit may be, for example, a general lighting unit that includes a housing and hot cathode discharge lamps of the present embodiment.

(6) Although an LCD apparatus is described above as an example of a display apparatus, the present invention is not limited to this. The display apparatus may be, for example, a signboard apparatus that includes the hot cathode discharge lamp of the present embodiment as a light source.

### INDUSTRIAL APPLICABILITY

The present invention is widely applicable to hot cathode fluorescent lamps and backlight units. Also, the present invention can provide a hot cathode fluorescent lamp that has a long lifetime, and therefore has a very high industrial utility value.

## Claims

1. A hot cathode discharge lamp including an envelope that has a rare gas enclosed therein, the hot cathode discharge lamp being arranged in a housing of a lamp unit, wherein
the rare gas includes krypton at a partial pressure rate of 20% or more.

2. The hot cathode discharge lamp of claim 1, wherein
the partial pressure rate of the krypton is 60% or less.

3. A hot cathode discharge lamp as in claim 1 or 2, wherein the partial pressure rate of the krypton is 45% or more.

4. A hot cathode discharge lamp as in any of claims 1 to 3, wherein
the partial pressure rate of the krypton is 55% or less.

5. A lamp unit comprising:
a housing; and
a hot cathode discharge lamp according to any of claims 1 to 4, being arranged in the housing.

6. A display apparatus including a lamp unit as in claim 5 as a light source.

7. A display apparatus comprising:
a housing; and
a hot cathode discharge lamp as in any of claims 1 to 4, being arranged in the housing.
